# EUROPÄISCHE PATENTSCHRIFT

(11) **EP 3 434 530 B1**
(45) Veröffentlichungstag und Bekanntmachung des Hinweises auf die Patenterteilung: **03.06.2020**
(21) Anmeldenummer: 18183323.7
(22) Anmeldetag: 13.07.2018
(51) Int. Cl.: F23Q 7/06, H02G 3/22

(54) **BRENNKAMMERANORDNUNG FÜR EIN FAHRZEUGHEIZGERÄT**
COMBUSTOR ASSEMBLY FOR A VEHICLE HEATER
DISPOSITIF DE CHAMBRE DE COMBUSTION POUR UN CHAUFFAGE DU VÉHICULE

(30) Priorität: 27.07.2017 DE 102017116985
(43) Veröffentlichungstag der Anmeldung: 30.01.2019
(73) Patentinhaber: Eberspächer Climate Control Systems GmbH & Co. KG, 73730 Esslingen (DE)
(72) Erfinder: Collmer, Andreas, 73773 Aichwald (DE); Haefner, Michael, 70469 Stuttgart (DE)
(74) Vertreter: Ruttensperger Lachnit Trossin Gomoll

(56) Entgegenhaltungen:
- DE-C1- 10 229 852
- JP-B2- 3 236 390
- US-A1- 2008 230 257

## Beschreibung

Die vorliegende Erfindung betrifft eine Brennkammeranordnung, die insbesondere in einem Fahrzeugheizgerät zur Verbrennung eines Gemisches aus Verbrennungsluft und Brennstoff und zur Übertragung von bei der Verbrennung entstehender Wärme auf ein Wärmeträgermedium eingesetzt werden kann.

Aus der DE 102 29 852 C1 ist eine Brennkammeranordnung gemäß dem Oberbegriff des Anspruchs 1 bekannt, bei welcher ein im Wesentlichen eine Brennkammer begrenzendes Brennkammergehäuse einen ersten Gehäusebereich bildet, während ein Wärmetauschergehäuse einen zweiten Gehäusebereich bildet. Zwischen den beiden Gehäusebereichen ist ein Strömungsraum für in die Brennkammer einzuleitende Verbrennungsluft gebildet. An dem das Brennkammergehäuse bereitstellenden ersten Gehäusebereich ist ein Zündorgansitz vorgesehen, an welchem ein zum Zünden des in der Brennkammer gebildeten Gemisches vorgesehenes Zündorgan abgestützt ist. In Zuordnung zu dem Zündorgansitz ist an dem das Wärmetauschergehäuse bereitstellenden zweiten Gehäusebereich eine Zündorgan-Durchgriffsöffnung vorgesehen. Durch diese Zündorgan-Durchgriffsöffnung hindurch kann das Zündorgan in Richtung auf den Zündorgansitz zu bewegt werden bzw. erstreckt sich eine vom Zündorgan ausgehende elektrische Leitung, mit der das Zündorgan zur Versorgung mit elektrischer Energie an eine Energiequelle angeschlossen werden kann.

Zum Abschließen der Zündorgan-Durchgriffsöffnung ist ein elastisch verformbares Abschlusselement beispielsweise aus gummielastischem Material vorgesehen. Dieses weist eine im Wesentlichen topfartige Struktur mit einem Abschlusselementenboden und einer, ausgehend vom Abschlusselementenboden, in Richtung auf den Strömungsraum zu sich erstreckenden Umfangswandung auf. An einer Außenseite der Umfangswandung ist an einem radial bezüglich einer Abschlusselementen-Längsachse vorspringenden Eingriffsbereich ein Innen-Eingriffsbereich gebildet, welcher an einer in Richtung zum Strömungsraum orientierten, die Zündorgan-Durchgriffsöffnung ringartig umgebenden Fläche an einer Wandung des zweiten Gehäusebereichs in Richtung von dem Strömungsraum weg abgestützt ist. Die für die Versorgung des Zündorgans mit elektrischer Energie vorgesehene elektrische Leitung durchsetzt den Abschlusselementenboden und erstreckt sich im Bereich einer von dem Strömungsraum weg orientierten Außen-Bodenfläche des Abschlusselementenbodens aus dem Abschlusselement heraus bzw. von diesem weg.

Aus der JP 3 236390 B2 ist ein verformbares Abschlusselement bekannt, durch welches eine Öffnung in einem plattenartigen Bauteil, durch welche ein elektrischer Leiter hindurch geführt ist, abgeschlossen ist. Zum Erzeugen eines dichten Anschlusses des Abschlusselements an das plattenartige Bauteils weist das Abschlusselement eine an seinem Außenumfang gebildete ringartige Einsenkung auf. Eine durch diese Einsenkung bereitgestellte Außen-Anlagefläche des Abschlusselements liegt an einer Außenseite des plattenartigen Bauteils an. Ein Bodenbereich der Einsenkung liegt an einem nach innen gewölbten und die Öffnung in dem plattenartigen Bauteil umgebenden Randbereich an, welcher wiederum mit seiner Stirnseite an einer durch die Einsenkung bereitgestellten Innen-Anlagefläche abgestützt ist. Ein die Durchführung für den elektrischen Leiter bereitstellender Anschlusselementenboden ist mit einer daran vorgesehenen Außen-Bodenfläche in Richtung einer Anschlusselementen-Längsachse bezüglich der Innen-Anlagefläche in Richtung von dem von dem plattenartigen Bauteil umgrenzten Raum weg versetzt.

Die US 2008/0230257 A1 umfasst ein an einem plattenartigen Bauteil anzubringendes, verformbares Abschlusselement. Zum Erzeugen eines dichten Anschlusses des Abschlusselements an das plattenartige Bauteils weist das Abschlusselement eine an seinem Außenumfang gebildete ringartige Einsenkung auf. Eine durch diese Einsenkung bereitgestellte Innen-Anlagefläche des Abschlusselements liegt an einer Innenseite des plattenartigen Bauteils an. Ein einen Durchströmkanal bereitstellender Anschlusselementenboden ist mit einer daran vorgesehenen Außen-Bodenfläche in Richtung einer Anschlusselementen-Längsachse bezüglich der Innen-Anlagefläche in Richtung von dem von dem plattenartigen Bauteil umgrenzten Raum weg versetzt.

Es ist die Aufgabe der vorliegenden Erfindung, eine Brennkammeranordnung, insbesondere für ein Fahrzeugheizgerät, sowie ein Verfahren zum Zusammenbau einer derartigen Brennkammeranordnung vorzusehen, welche bei technisch einfachem Aufbau der Brennkammeranordnung einen einfachen Zusammenbau derselben ermöglichen.

Erfindungsgemäß wird diese Aufgabe gelöst durch eine Brennkammeranordnung, insbesondere für ein Fahrzeugheizgerät, gemäß Anspruch 1. Diese umfasst
- einen ersten Gehäusebereich mit einem Zündorgansitz, wobei an dem Zündorgansitz ein Zündorgan abgestützt ist,
- einen einen Fluidströmungsraum nach außen begrenzenden zweiten Gehäusebereich mit einer Zündorgan-Durchgriffsöffnung, wobei das Zündorgan durch die Zündorgan-Durchgriffsöffnung hindurch an den Zündorgansitz heran bewegbar ist oder/und eine elektrische Leitung für das Zündorgan durch die Zündorgan-Durchgriffsöffnung hindurch verläuft,
- ein elastisch verformbares Abschlusselement zum Abschließen der Zündorgan-Durchgriffsöffnung, wobei das Abschlusselement einen mit einer die Zündorgan-Durchgriffsöffnung umgebenden Wandung des zweiten Gehäusebereichs zusammenwirkenden Eingriffsbereich umfasst, wobei der Eingriffsbereich einen bezüglich einer dem Fluidströmungsraum zugewandten Innenfläche der Wandung abgestützten Innen-Eingriffsbereich umfasst, und wobei das Abschlusselement einen Abschlusselementenboden mit einer nach außen, in Richtung von dem Fluidströmungsraum weg orientierten Außen-Bodenfläche umfasst.

Um eine stabile Anlage und insbesondere auch einen fluiddichten Abschluss des Strömungsraums zu gewährleisten, umfasst der Innen-Eingriffsbereich eine die Abschlusselementen-Längsachse ringartig umgebende, zur Abschlusselementen-Längsachse im Wesentlichen orthogonal und von dem Fluidströmungsraum weg orientierte Innen-Anlagefläche.

Die Brennkammeranordnung ist dadurch gekennzeichnet, dass die Außen-Bodenfläche bezüglich der Innen-Anlagefläche des Innen-Eingriffsbereichs in Richtung einer Abschlusselementen-Längsachse auf den Fluidströmungsraum zu versetzt ist.

Die bezüglich des Innen-Eingriffsbereichs in Richtung auf den Fluidströmungsraum zu versetzte Außen-Bodenfläche kann beim Zusammenbau der Brennkammeranordnung durch ein Montagewerkzeug beaufschlagt werden, so dass das elastisch verformbare Abschlusselement in die Zündorgan-Durchgriffsöffnung im Wesentlichen mit einer ziehenden Bewegung hinein bewegt wird. Dies bedeutet, dass bei dieser Bewegung bzw. Beaufschlagung der Bereich, in welchem die Kraft vermittels des Montagewerkzeugs in das Abschlusselement eingeleitet wird, in der Bewegungsrichtung demjenigen Bereich, in welchem der Eingriffsbereich, insbesondere der Innen-Eingriffsbereich, gebildet ist, vorangeht und diesen unter elastischer Verformung, insbesondere axialer Dehnung des Abschlusselements, in die Zündorgan-Durchgriffsöffnung hineinzieht. Dies vereinfacht den Montagevorgang wesentlich, da durch die ziehende Beaufschlagung das Abschlusselement axial gedehnt wird, dabei seine Radialabmessung bezüglich der Abschlusselementen-Längsachse verringert und somit leichter durch die Zündorgan-Durchgriffsöffnung hindurch bzw. in diese hinein bewegt werden kann. Die axiale Dehnung des Abschlusselements während des Vorgangs des Einbringens in die Zündorgan-Durchgriffsöffnung kann beispielsweise dadurch erreicht bzw. unterstützt werden, dass das Abschlusselement einen bezüglich einer von dem Fluidströmungsraum abgewandten Außenfläche der Wandung abgestützten Außen-Eingriffsbereich umfasst.

Auch der Außen-Eingriffsbereich kann den fluiddichten Abschluss dadurch unterstützen, dass dieser eine die Abschlusselementen-Längsachse ringartig umgebende, zur Abschlusselementen-Längsachse im Wesentlichen orthogonal orientierte Außen-Anlagefläche umfasst.

Ein weiter verbesserter Zusammenhalt des Abschlusselements mit dem zweiten Gehäusebereich bei weiter verbesserter Dichtwirkung kann erfindungsgemäß beispielsweise dadurch erreicht werden, dass das Abschlusselement einen bezüglich einer die Zündorgan-Durchgriffsöffnung umgebenden Öffnungs-Umfangsfläche der Wandung abgestützten Umfangs-Eingriffsbereich umfasst. Insbesondere kann dabei vorgesehen sein, dass die Öffnungs-Umfangsfläche der Wandung konisch ausgebildet ist derart, dass die Zündorgan-Durchgriffsöffnung sich in Richtung auf den Fluidströmungsraum zu verjüngt. Dabei kann der Umfangs-Eingriffsbereich eine die Abschlusselementen-Längsachse ringartig umgebende, konische Umfangs-Anlagefläche umfassen.

Für eine einfach zu realisierende, gleichwohl stabil und dicht wirkende Ausgestaltung wird vorgeschlagen, dass die Innen-Anlagefläche, die Außen-Anlagefläche und die Umfangs-Anlagefläche eine bezüglich der Abschlusselementen-Längsachse nach radial außen offene, die Wandung des zweiten Gehäusebereichs aufnehmende Umfangsnut begrenzen.

Um vermittels des Abschlusselements auch einen stabilen Sitz für das Zündorgan zu gewährleisten, kann an einer dem Fluidströmungsraum zugewandten Innenseite des Abschlusselementenbodens ein in Richtung der Abschlusselementen-Längsachse auf den Fluidströmungsraum zu vorspringender, das Zündorgan in Anlage an dem Zündorgansitz beaufschlagender Beaufschlagungsvorsprung vorgesehen sein. Weiter kann für eine stabile Einbindung der das Zündorgan mit elektrischer Energie versorgenden elektrischen Leitung an einer vom Fluidströmungsraum abgewandten Außenseite des Abschlusselementenbodens ein in Richtung der Abschlusselementen-Längsachse vom Fluidströmungsraum weg vorspringender, von der elektrischen Leitung durchsetzter Leitungsvorsprung vorgesehen sein.

Die Außen-Bodenfläche kann die Abschlusselementen-Längsachse ringartig umgeben.

Der erste Gehäusebereich kann ein eine Brennkammer begrenzendes Brennkammergehäuse bereitstellen. Der zweite Gehäusebereich kann ein Wärmetauschergehäuse bereitstellen. Der zwischen den beiden Gehäusebereichen begrenzte Fluidströmungsraum ist vorzugsweise ein Verbrennungsluftströmungsraum.

Für eine die vorangehend beschriebene ziehende Beaufschlagung des Abschlusselements unterstützende Ausgestaltung wird vorgeschlagen, dass das Abschlusselement eine von dem Abschlusselementenboden in Richtung der Abschlusselementen-Längsachse von dem Fluidströmungsraum weg sich erstreckende und den Eingriffsbereich bereitstellende Abschlusselementen-Umfangswandung umfasst,

Gemäß einem weiteren Aspekt der Erfindung wird die eingangs angegebene Aufgabe gelöst durch ein Verfahren nach Anspruch 11 zum Zusammenbau einer Brennkammeranordnung nach einem der vorangehenden Ansprüche, umfassend die Maßnahmen:
a) Bereitstellen einer Gehäuseanordnung mit dem ersten Gehäusebereich und dem zweiten Gehäusebereich derart, dass der Zündorgansitz im Bereich der Zündorgan-Durchgriffsöffnung positioniert ist,
b) Einbringen des Zündorgans durch die Zündorgan-Durchgriffsöffnung hindurch derart, dass das Zündorgan in Anlage an dem Zündorgansitz gebracht wird,
c) Einbringen des Abschlusselements in die Zündorgan-Durchgriffsöffnung vermittels eines die Außen-Bodenfläche beaufschlagenden Montagewerkzeugs derart, dass durch das die Außen-Bodenfläche in Richtung der Abschlusselementen-Längsachse auf den Fluidströmungsraum zu beaufschlagende Montagewerkzeug das Abschlusselement mit seinem Abschlusselementenboden und seinem Innen-Eingriffsbereich durch die Zündorgan-Durchgriffsöffnung hindurch bewegt wird, bis der Innen-Eingriffsbereich im Wesentlichen an der Innenseite bezüglich der Innenfläche der Wandung des zweiten Gehäusebereichs positioniert ist,
d) Entfernen des Montagewerkzeugs von der Außen-Bodenfläche und dabei Entspannen des Abschlusselements derart, dass der Innen-Eingriffsbereich durch Verlagerung nach radial außen die Innenfläche der Wandung des zweiten Gehäusebereichs radial übergreift und zur Anlage an dieser kommt.

Um den Montagevorgang zu vereinfachen, wird vorgeschlagen, dass vor Durchführung der Maßnahmen b) und c) eine das Zündorgan und das Abschlusselement umfassende Vormontagebaugruppe bereitgestellt wird, und dass bei den Maßnahmen b) und c) die Vormontagebaugruppe durch die Zündorgan-Durchgriffsöffnung hindurch in diese eingebracht wird.

Zur Herbeiführung der axialen Dehnung des Abschlusselements bei Beaufschlagung durch das Montagewerkzeug kann bei der Maßnahme c) das Abschlusselement mit seinem Außen-Eingriffsbereich sich in Richtung der Abschlusselementen-Längsachse an der Außenfläche der Wandung des zweiten Gehäusebereichs abstützen.

Nach der Maßnahme d) presst vorzugsweise der Beaufschlagungsvorsprung das Zündorgan in Anlage an dem Zündorgansitz. Somit sind keine weiteren baulichen Maßnahmen bzw. Verfahrensschritte erforderlich, um einen stabilen Sitz des Zündorgans zu gewährleisten.

Ferner kann vorgesehen sein, dass das Abschlusselement eine von dem Abschlusselementenboden in Richtung der Abschlusselementen-Längsachse von dem Fluidströmungsraum weg sich erstreckende und den Eingriffsbereich bereitstellende Abschlusselementen-Umfangswandung umfasst, dass das Montagewerkzeug einen im Wesentlichen zylindrischen, vorzugsweise hohlzylindrischen, Abschlusselementen-Beaufschlagungsbereich umfasst, und dass bei nicht durch das Montagewerkzeug beaufschlagtem Abschlusselement eine Innenabmessung, vorzugsweise Innendurchmesser, der Abschlusselementen-Umfangswandung größer ist, als eine Außenabmessung, vorzugsweise Außendurchmesser, des Montagewerkzeugs in seinem Abschlusselementen-Beaufschlagungsbereich.

Die vorliegende Erfindung wird nachfolgend mit Bezug auf die beiliegenden Figuren detailliert beschrieben. Es zeigt:
- Fig. 1: eine Teil-Querschnittansicht einer Brennkammeranordnung für ein Fahrzeugheizgerät;
- Fig. 2: eine ein Zündorgan und ein elastisch verformbares Abschlusselement umfassende Vormontagebaugruppe;
- Fig. 3: eine Teil-Ansicht eines Wärmetauschergehäuses mit einer daran ausgebildeten Zündorgan-Durchgriffsöffnung;
- Fig. 4: eine Längsschnittansicht der Vormontagebaugruppe der Fig. 2 in Verbindung mit einem Montagewerkzeug;
- Fig. 5: den Vorgang des Einbringens der Vormontagebaugruppe der Fig. 2 und 4 beim Hindurchführen des Zündorgans durch die Zündorgan-Durchgriffsöffnung;
- Fig.6: den Vorgang des Einbringens der Vormontagebaugruppe der Fig. 2 und 4 bei durch die Zündorgan-Durchgriffsöffnung hindurchgeführtem Zündorgan und sich bezüglich einer Wandung des Wärmetauschergehäuses abstützendem Abschlusselement in axial gestrecktem Zustand;
- Fig. 7: eine der Fig. 3 entsprechende Teil-Ansicht des Wärmetauschergehäuses mit in die Zündorgan-Durchgriffsöffnung eingebrachtem Abschlusselement.

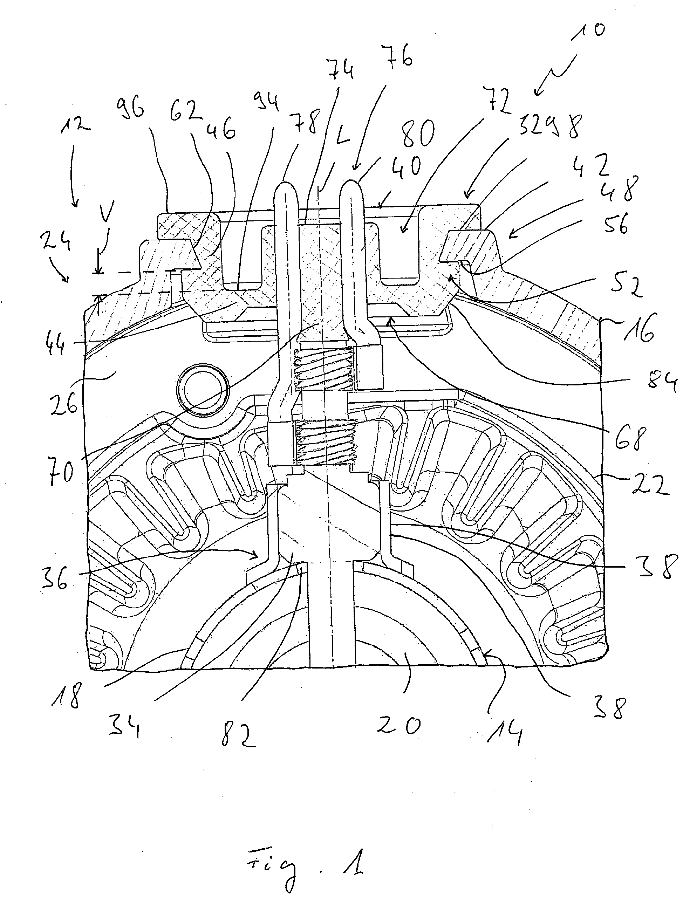

Die Fig. 1 zeigt eine allgemein mit 10 bezeichnete Brennkammeranordnung für ein brennstoffbetriebenes Fahrzeugheizgerät. Die Brennkammeranordnung 10 umfasst eine Gehäuseanordnung 12 mit einem ersten Gehäusebereich 14 und einem zweiten Gehäusebereich 16.

Der erste Gehäusebereich 14 stellt ein allgemein mit 18 bezeichnetes Brennkammergehäuse mit einer darin gebildeten Brennkammer 20 bereit. In die Brennkammer 20 werden Brennstoff und Verbrennungsluft eingespeist, um ein zündfähiges Gemisch zu erzeugen und zu verbrennen. Der zweite Gehäusebereich 16 bildet im Wesentlichen ein Wärmetauschergehäuse 22, welches das Brennkammergehäuse 18 an seiner Außenseite umgibt. In dem in Fig. 1 dargestellten Längenbereich 24 des Wärmetauschergehäuses 22 ist zwischen diesem und dem Brennkammergehäuse ein Strömungsraum 26 für in die Brennkammer 20 einzuspeisende Luft gebildet. Diese kann beispielsweise durch ein Seitenkanalgebläse oder dergleichen in den Strömungsraum 26 und über diesen in die Brennkammer 20 gefördert werden.

An der Außenseite des Wärmetauschergehäuses 22 sind in einem Längenbereich 28 Wärmeübertragungsrippen 30 gebildet, so dass das Wärmetauschergehäuse 22 an dessen Außenseite umströmende Luft Wärme aufnehmen kann, welche das Wärmetauschergehäuse 22 im Längenbereich 28 von dem an dessen Innenseite strömenden Verbrennungsabgas aufnimmt.

Im Längenbereich 24 des Wärmetauschergehäuses 22 bzw. des zweiten Gehäusebereichs 16 der Gehäuseanordnung 12 ist eine Zündorgan-Durchgriffsöffnung 32 für ein in Fig. 1 dargestelltes Zündorgan 34, beispielsweise Glühstift, vorgesehen. In Zuordnung zu der Zündorgan-Durchgriffsöffnung 32 ist am ersten Gehäusebereich 14 ein allgemein mit 36 bezeichneter Zündorgansitz gebildet. Dieser kann an der Außenseite des Brennkammergehäuses 18 eine Zündorganaufnahmebuchse 38 umfassen, welche das Zündorgan 34 zentriert und dafür sorgt, dass dieses in seiner Längsrichtung definiert an der Außenoberfläche des Brennkammergehäuses 18 aufsitzt, ohne dabei seitlich, also im Wesentlichen in Umfangsrichtung, entlang der Außenseite des Brennkammergehäuses 18, verschoben werden zu können.

In Zuordnung zu der Zündorgan-Durchgriffsöffnung 32 ist ferner ein allgemein mit 40 bezeichnetes Abschlusselement vorgesehen. Das Abschlusselement 40 ist elastisch verformbar, was im Sinne der vorliegenden Erfindung bedeutet, dass es zum Einsetzen in die Zündorgan-Durchgriffsöffnung 32 verformt werden kann und aufgrund seiner eigenen Elastizität wieder im Wesentlichen in seine Ausgangsform zurückkehrt und, wie im Folgenden noch dargelegt, dann stabil an einer Wandung 42 des zweiten Gehäusebereichs 16 gehalten ist. Beispielsweise kann das Abschlusselement 40 aus Gummi oder gummiartigem Material aufgebaut sein.

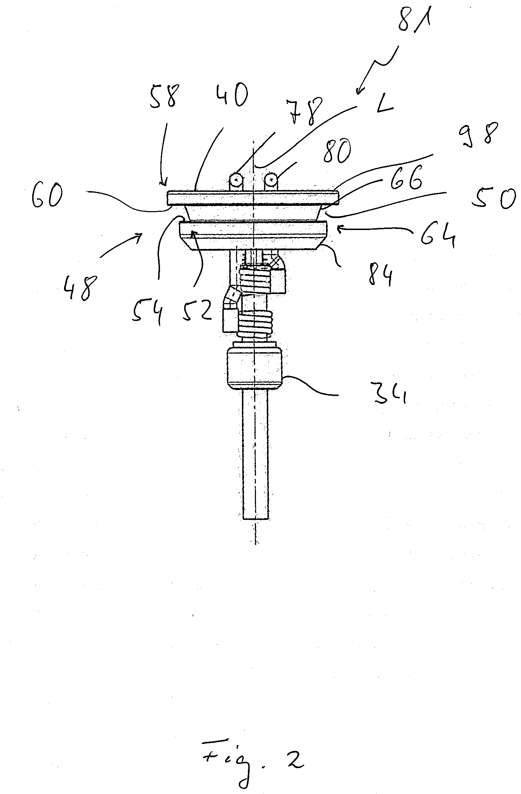

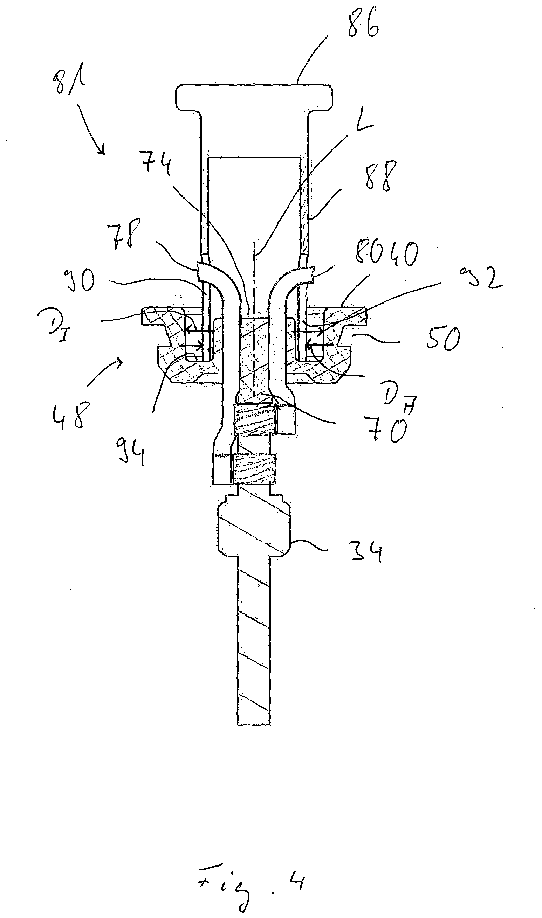

Das Abschlusselement 40 ist mit im Wesentlichen topfartiger Struktur ausgebildet und umfasst einen Abschlusselementenboden 44 und einen von diesem sich in Richtung einer Abschlusselementen-Längsachse L erstreckende Abschlusselementen-Umfangswandung 46. An der Abschlusselementen-Umfangswandung ist ein zur Zusammenwirkung mit der Wandung 42 des zweiten Gehäusebereichs 16 ausgebildeter Eingriffsbereich 48 vorgesehen. Der Eingriffsbereich 48 umfasst im Wesentlichen eine in Fig. 2 und in Fig. 4 auch erkennbare Umfangsnut 50, in welche bei am zweiten Gehäusebereich 16 angebrachtem Abschlusselement 40 die Wandung 42 mit ihrem die Zündorgan-Durchgriffsöffnung 32 umgebenden Bereich eingreift.

Der Eingriffsbereich 48 umfasst einen Innen-Eingriffsbereich 52, welcher im dargestellten Ausgestaltungsbeispiel eine Innen-Anlagefläche 54 umfasst. Die Innen-Anlagefläche 54 ist am Abschlusselement 40 derart vorgesehen, dass sie die Abschlusselementen-Längsachse L im Wesentlichen ringartig umgibt und zu dieser im Wesentlichen orthogonal orientiert ist, und zwar in Richtung von dem Strömungsraum 26 weg. Bei am zweiten Gehäusebereich 16 angebrachtem Abschlusselement 40 liegt somit die Innen-Anlagefläche 54 an einer Innenfläche 56 der Wandung 42 mit ihrem die Zündorgan-Durchgriffsöffnung 32 umgebenden Bereich an. Die Innenfläche 56 der Wandung 42 ist eine Fläche derselben, die im Wesentlichen in Richtung zum Strömungsraum 26, also nach innen, orientiert ist.

Das Abschlusselement 40 umfasst ferner einen Außen-Eingriffsbereich 58 mit einer die Abschlusselementen-Längsachse L ringartig umgebenden und zu dieser im Wesentlichen orthogonal, in Richtung auf den Strömungsraum 26 zu orientierten Außen-Anlagefläche 60. Man erkennt in den Fig. 2 und 4, dass die beiden Anlageflächen 54, 60 insbesondere bei entspanntem Abschlusselement 40 zueinander im Wesentlichen parallel und einander gegenüberliegend angeordnet sind.

In Zuordnung zu einer die Zündorgan-Durchgriffsöffnung 32 im Wesentlichen in radialer Richtung begrenzenden Öffnungs-Umfangsfläche 62 der Wandung 42 weist das Abschlusselement 40 einen Umfangs-Eingriffsbereich 64 auf. Der Umfangs-Eingriffsbereich 64 umfasst eine Umfangs-Anlagefläche 66, welche bei in die Zündorgan-Durchgriffsöffnung 32 eingesetztem Abschlusselement 40 im Wesentlichen vollständig an der Öffnungs-Umfangsfläche 62 anliegt. Man erkennt insbesondere in Fig. 1 deutlich, dass die Öffnungs-Umfangsfläche 62 im Wesentlichen konisch ausgebildet ist, so dass die Zündorgan-Durchgriffsöffnung 32 einen in Richtung auf den Strömungsraum 26 zu abnehmenden Querschnitt aufweist, sich in dieser Richtung also verjüngend ausgebildet ist. Entsprechend ist auch im entspannten Zustand des Abschlusselements 40 die Umfangs-Anlagefläche 66 komplementär zur Öffnungs-Umfangsfläche 62 konisch ausgebildet. Zwischen der Innen-Anlagefläche 54, der Außen-Anlagefläche 60 und der Umfangs-Anlagefläche 66 ist die nach radial außen bezüglich der Abschlusselementen-Längsachse L offene Umfangsnut 50 begrenzt.

Am Abschlusselementenboden 44 ist an dessen dem Strömungsraum 26 zugewandter Innenseite 68 ein Beaufschlagungsvorsprung 70 vorgesehen. Dieser steht in den Strömungsraum 26 so weit hervor, dass er in Anlage am Zündorgan 34 ist und dieses in Richtung der Abschlusselementen-Längsachse L, welche im Zusammenbauzustand im Wesentlichen auch einer Längsachse des Zündorgans 34 entspricht, in Richtung auf den Zündorgansitz 36 zu vorspannt und somit für eine definierte Positionierung des Zündorgans 34 sorgt.

An einer vom Strömungsraum 26 abgewandten Außenseite 72 des Abschlusselementenbodens 44 ist vorzugsweise zentrisch bezüglich der Abschlusselementen-Längsachse L ein in Richtung von dem Strömungsraum 26 weg, also nach außen sich erstreckender Leitungsvorsprung 74 vorgesehen. Eine für die Versorgung des Zündorgans 34 mit elektrischer Energie vorgesehene elektrische Leitung 76 bzw. die beiden Leiter 78, 80 der Leitung 76, ist bzw. sind im Bereich des Leitungsvorsprungs 74 durch den Abschlusselementenboden 44 hindurch geführt.

Da im Zusammenbauzustand das Abschlusselement 40 aufgrund seiner Elastizität einerseits unter Vorspannung an der Wandung 42 des zweiten Gehäusebereichs 16 anliegt und somit insbesondere mit seinen Anlageflächen 54, 60, 66 in diesem Bereich einem im Wesentlichen vollflächigen, fluiddichten Anschluss gewährleistet, und andererseits auch an den Außenoberflächen der Leiter 78, 80 der Leitung 76 anliegt, ist der Strömungsraum 26 durch das Abschlusselement 40 fluiddicht abgeschlossen. Da in diesem Strömungsraum 26 die zur Brennkammer 20 zu fördernde Verbrennungsluft strömt, besteht keine Gefahr, dass eine übermäßige Erwärmung des Abschlusselements 40 im Verbrennungsbetrieb entsteht.

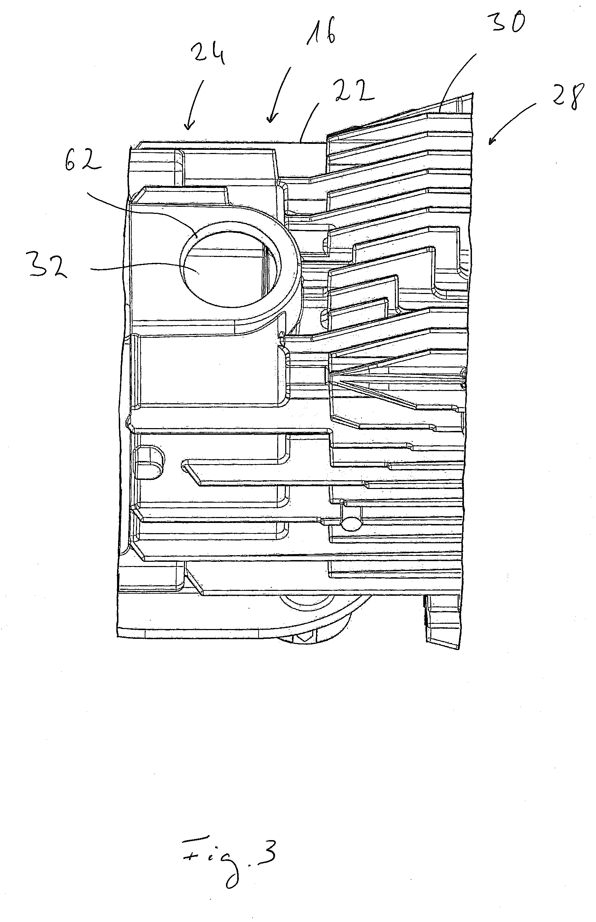

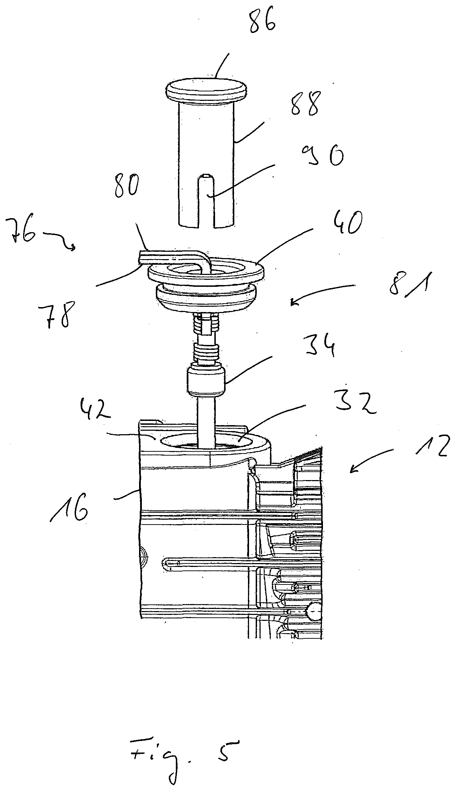

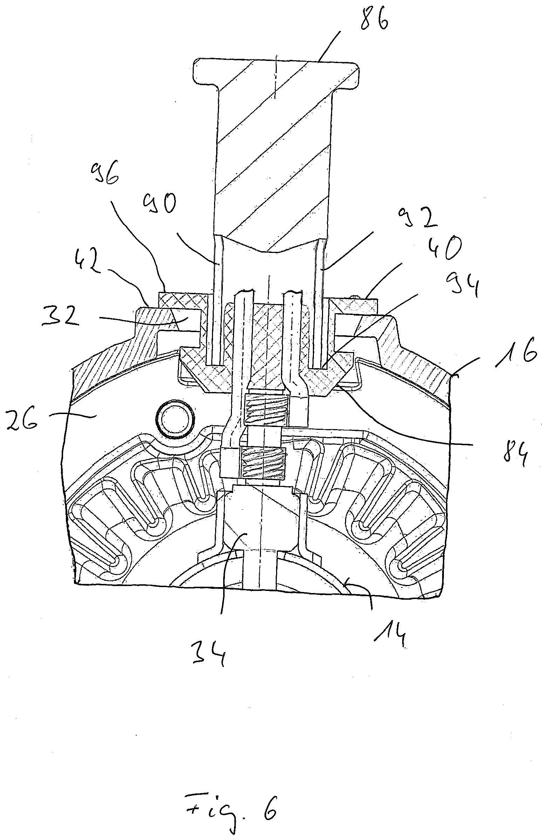

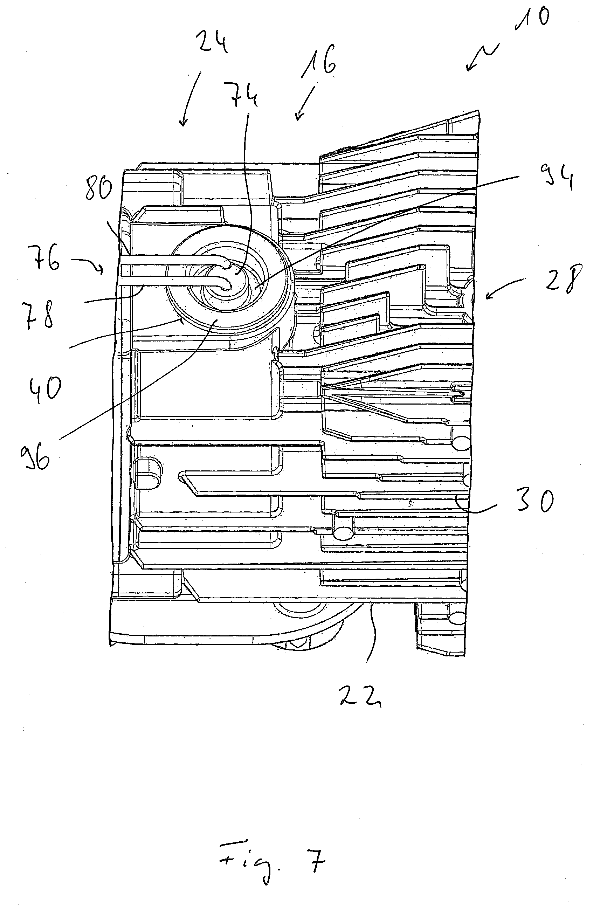

Nachfolgend wird mit Bezug auf die Fig. 2 bis 7 beschrieben, wie die in Fig. 1 dargestellte Brennkammeranordnung 10 zusammengebaut werden kann, insbesondere das Zündorgan 34 bzw. das Abschlusselement 40 in diese eingebracht werden kann.

Hierfür wird zunächst die Gehäuseanordnung 12 mit den beiden Gehäusebereichen 14, 16 und weiteren in den Figuren nicht dargestellten Systembereichen zusammengesetzt, und zwar derart, dass der Zündorgansitz 36 im Wesentlichen im Bereich der Zündorgan-Durchgriffsöffnung 32 positioniert ist, von außen her also ein Zugriff zu diesem Zündorgansitz 36 besteht. Ferner wird eine in den Fig. 2 und 4 erkennbare Vormontagebaugruppe 81 bereitgestellt, welche im Wesentlichen das Zündorgan 34 und das Abschlusselement 40 umfasst. Hierfür können die beiden Leiter 78, 80 bzw. allgemein die Leitung 76 durch den Abschlusselementenboden 44 im Bereich der dafür vorgesehenen Öffnungen im Leitungsvorsprung 74 geführt werden und das Abschlusselement 40 so nahe an das Zündorgan 34 heranbewegt werden, dass der Beaufschlagungsvorsprung 70 am Zündorgan 34 anliegt.

Nachfolgend wird diese Vormontagebaugruppe 81 von außen an die Gehäuseanordnung 12, insbesondere den zweiten Gehäusebereich 16 herangeführt, so dass das Zündorgan 34 durch die Zündorgan-Durchgriffsöffnung 32 hindurchgeführt wird und in den Bereich des Zündorgansitzes 36 gelangt. Im Verlaufe dieser Bewegung durchsetzt das Zündorgan 34 auch eine dafür vorgesehene Öffnung 82 im Brennkammergehäuse 18, bis es zur Anlage am Zündorgansitz 36 kommt.

Im Verlaufe dieser Bewegung nähert auch das Abschlusselement 40 sich der Wandung 42 des zweiten Gehäusebereichs 16 an. Das Abschlusselement 40 weist im Übergangsbereich vom Abschlusselementenboden 44 zur Abschlusselementen-Umfangswandung 46 eine Einführschräge 84 auf, welche in Verbindung mit der konisch gestalteten Öffnungs-Umfangswandung 62 der Wandung 42 grundsätzlich das Einführen des Abschlusselements 40 in die Zündorgan-Durchgriffsöffnung 32 unter elastischer Verformung des Abschlusselements 40 erleichtert.

Um diese elastische Verformung herbeizuführen, wird ein insbesondere in den Fig. 4 bis 6 erkennbares Montagewerkzeug 86 eingesetzt. Dieses weist einen im Wesentlichen hohlzylindrisch ausgebildeten Abschlusselementen-Beaufschlagungsbereich 88 auf, welcher axial offene Aussparungen 90, 92 für die Hindurchführung der Leiter 78, 80 aufweist.

Der Abschlusselementenboden 44 stellt insbesondere aufgrund des Vorhandenseins des Leitungsvorsprungs 74 eine im Wesentlichen ringartig die Abschlusselementen-Längsachse L umgebende Außen-Bodenfläche 94 bereit, welche sich in radialer Richtung bezüglich der Abschlusselementen-Längsachse L im Wesentlichen zwischen der Abschlusselementen-Umfangswandung 46 und dem Leistungsvorsprung 74 erstreckt. Die Außen-Bodenfläche 94 ist in Richtung vom Strömungsraum 26 weg orientiert und weist bezüglich der Innen-Anlagefläche 54 des Abschlusselements 40 einen Versatz V in Richtung der Abschlusselementen-Längsachse L auf den Strömungsraum 26 zu auf. Bei Beaufschlagung durch das Montagewerkzeug 86 tritt dieses mit dem Abschlusselement 40 im Bereich der Außen-Bodenfläche 94 des Abschlusselementenbodens 44 in Kontakt, also in einem Bereich, der bei Bewegung auf den Strömungsraum 26 zu bzw. in diesen hinein der Innen-Anlagefläche 54 des Innen-Eingriffsbereichs 52 vorangeht. Dies bedeutet, dass das Abschlusselement 40 bei Beaufschlagung durch das Montagewerkzeug 26 im Bereich der Außen-Bodenfläche 94 ziehend belastet wird, also die entgegen der Bewegungsrichtung in den Strömungsraum 26 hinein nach hinten folgenden Bereiche gezogen werden.

Bei derartiger Beaufschlagung durch das Montagewerkzeug 86 wird zunächst das Abschlusselement 40 mit dem Abschlusselementenboden 44 durch die Zündorgan-Durchgriffsöffnung 42 hindurchbewegt bzw. hindurchgezogen, was, wie vorangehend bereits beschrieben, durch Zusammenwirkung der Einführschräge 84 mit der Öffnungs-Umfangsfläche 62 unterstützt wird. Im Verlaufe dieser Bewegung kommt ein die Außen-Anlagefläche 60 bzw. ein den Außen-Eingriffsbereich 58 bereitstellender, nach radial außen bezüglich der Abschlusselementen-Längsachse L flanschartig hervorspringender Bereich 96 des Abschlusselements 40 in Anlage an einer Außenfläche 98 der Wandung 42 und bildet somit ein Widerlager. Das Abschlusselement 40 wird dabei axial, also in Richtung der Abschlusselementen-Längsachse L gedehnt, wobei aufgrund dieser Dehnung die radiale Abmessung des Abschlusselements 40 abnimmt. Dies wird insbesondere auch dadurch ermöglicht, dass die Abschlusselementen-Umfangswandung eine Innenabmessung D_{I} , also beispielsweise Innendurchmesser, aufweist, die größer ist, als eine Außenabmessung D_{A}, also beispielsweise Außendurchmesser, des Montagwerkzeugs 86 in seinem Abschlusselementen-Beaufschlagungsbereich 88. Somit ist zwischen der Abschlusselementen-Umfangswandung 46 und dem Abschlusselementen-Beaufschlagungsbereich 88 ausreichend radialer Zwischenraum vorhanden, so dass eine Abnahme der Radialausdehnung des Abschlusselements 40 durch das Montagewerkzeug 86 nicht behindert wird.

Das Abschlusselement 40 wird durch das Montagewerkzeug 86 derart bzw. so lange beaufschlagt, bis der Abschlusselementenboden 44 und mit diesem der Innen-Eingriffsbereich 52 so weit axial bewegt wurde, dass der Innen-Eingriffsbereich 52 bzw. dessen Innen-Anlagefläche 54 im Wesentlichen an der Innenseite bezüglich der Innenfläche 56 der Wandung 42 liegt. Ist dies erreicht, wird die axiale Beaufschlagung durch das Montagewerkzeug 86 beendet, so dass das Abschlusselement 40 sich wieder axial zusammenziehen kann und dabei sich radial ausdehnt. Das in diesem Zustand bereits mit seiner Außen-Anlagefläche 60 an der Außenfläche 98 der Wandung 42 anliegende Abschlusselement 40 kommt im Verlaufe dieser Entspannung auch mit seiner Innen-Anlagefläche 54 in Anlage an der Innenfläche 56 der Wandung 42 bzw. mit seiner Umfangs-Anlagefläche 66 in Anlage an der Öffnungs-Umfangsfläche 62 der Wandung 42. In diesem Zustand liegt das Abschlusselement 40, wie vorangehend bereits dargelegt, aufgrund seiner eigenen Elastizität unter Vorspannung an den verschiedenen Flächen der Wandung 42 des zweiten Gehäusebereichs 16 und auch den Leitern 78, 80 an und stellt somit den fluiddichten Abschluss des Strömungsraums 26 her. Gleichzeitig beaufschlagt das so an dem zweiten Gehäusebereich 16 gehaltene Abschlusselement 40 das Zündorgan 34 in Richtung der Abschlusselementen-Längsachse L auf seinen Zündorgansitz 36 zu, so dass auch das Zündorgan 34 in definierter Positionierung gehalten ist.

## Patentansprüche

1. Brennkammeranordnung, insbesondere für ein Fahrzeugheizgerät, umfassend
- einen ersten Gehäusebereich (14) mit einem Zündorgansitz (36), wobei an dem Zündorgansitz (36) ein Zündorgan (34) abgestützt ist,
- einen einen Fluidströmungsraum (26) nach außen begrenzenden zweiten Gehäusebereich (16) mit einer Zündorgan-Durchgriffsöffnung (32), wobei das Zündorgan (34) durch die Zündorgan-Durchgriffsöffnung (32) hindurch an den Zündorgansitz (36) heran bewegbar ist oder/und eine elektrische Leitung (76) für das Zündorgan (34) durch die Zündorgan-Durchgriffsöffnung (32) hindurch verläuft,
- ein elastisch verformbares Abschlusselement (40) zum Abschließen der Zündorgan-Durchgriffsöffnung (32), wobei das Abschlusselement (40) einen mit einer die Zündorgan-Durchgriffsöffnung (32) umgebenden Wandung (42) des zweiten Gehäusebereichs (16) zusammenwirkenden Eingriffsbereich (48) umfasst, wobei der Eingriffsbereich (48) einen bezüglich einer dem Fluidströmungsraum (26) zugewandten Innenfläche (56) der Wandung (42) abgestützten Innen-Eingriffsbereich (52) umfasst, wobei der Innen-Eingriffsbereich (52) eine eine Abschlusselementen-Längsachse (L) ringartig umgebende, zur Abschlusselementen-Längsachse (L) im Wesentlichen orthogonal und von dem Fluidströmungsraum (26) weg orientierte Innen-Anlagefläche (54) umfasst, und wobei das Abschlusselement (40) einen Abschlusselementenboden (44) mit einer nach außen, in Richtung von dem Fluidströmungsraum (26) weg orientierten Außen-Bodenfläche (94) umfasst,
**dadurch gekennzeichnet, dass** die Außen-Bodenfläche (94) bezüglich der Innen-Anlagefläche (54) des Innen-Eingriffsbereichs (52) in Richtung der Abschlusselementen-Längsachse (L) auf den Fluidströmungsraum (26) zu versetzt ist.

2. Brennkammeranordnung nach Anspruch 1, **dadurch gekennzeichnet, dass** das Abschlusselement (40) einen bezüglich einer von dem Fluidströmungsraum (26) abgewandten Außenfläche (98) der Wandung (42) abgestützten Außen-Eingriffsbereich (58) umfasst.

3. Brennkammeranordnung nach Anspruch 2, **dadurch gekennzeichnet, dass** der Außen-Eingriffsbereich (58) eine die Abschlusselementen-Längsachse (L) ringartig umgebende, zur Abschlusselementen-Längsachse (L) im Wesentlichen orthogonal orientierte Außen-Anlagefläche (60) umfasst.

4. Brennkammeranordnung nach einem der vorangehenden Ansprüche, **dadurch gekennzeichnet, dass** das Abschlusselement (40) einen bezüglich einer die Zündorgan-Durchgriffsöffnung (32) umgebenden Öffnungs-Umfangsfläche (62) der Wandung (42) abgestützten Umfangs-Eingriffsbereich (64) umfasst.

5. Brennkammeranordnung nach Anspruch 4, **dadurch gekennzeichnet, dass** die Öffnungs-Umfangsfläche (62) der Wandung (42) konisch ausgebildet ist derart, dass die Zündorgan-Durchgriffsöffnung (32) sich in Richtung auf den Fluidströmungsraum (26) zu verjüngt, vorzugsweise wobei der Umfangs-Eingriffsbereich (64) eine die Abschlusselementen-Längsachse (L) ringartig umgebende, konische Umfangs-Anlagefläche (66) umfasst.

6. Brennkammeranordnung nach Anspruch 3 und 5, **dadurch gekennzeichnet, dass** die Innen-Anlagefläche (54), die Außen-Anlagefläche (60) und die Umfangs-Anlagefläche (66) eine bezüglich der Abschlusselementen-Längsachse (L) nach radial außen offene, die Wandung (42) des zweiten Gehäusebereichs (16) aufnehmende Umfangsnut (50) begrenzen.

7. Brennkammeranordnung nach einem der vorangehenden Ansprüche, **dadurch gekennzeichnet, dass** an einer dem Fluidströmungsraum (26) zugewandten Innenseite (68) des Abschlusselementenbodens (44) ein in Richtung der Abschlusselementen-Längsachse (L) auf den Fluidströmungsraum (26) zu vorspringender, das Zündorgan (34) in Anlage an dem Zündorgansitz (36) beaufschlagender Beaufschlagungsvorsprung (70) vorgesehen ist, oder/und dass an einer vom Fluidströmungsraum (26) abgewandten Außenseite (72) des Abschlusselementenbodens (44) ein in Richtung der Abschlusselementen-Längsachse (L) vom Fluidströmungsraum (26) weg vorspringender, von der elektrischen Leitung (76) durchsetzter Leitungsvorsprung (74) vorgesehen ist.

8. Brennkammeranordnung nach einem der vorangehenden Ansprüche, dass die Außen-Bodenfläche (94) die Abschlusselementen-Längsachse (L) ringartig umgibt.

9. Brennkammeranordnung nach einem der vorangehenden Ansprüche, **dadurch gekennzeichnet, dass** der erste Gehäusebereich (14) ein eine Brennkammer (20) begrenzendes Brennkammergehäuse (18) bereitstellt, oder/und dass der zweite Gehäusebereich (16) ein Wärmetauschergehäuse (22) bereitstellt, oder/und dass der Fluidströmungsraum (26) ein Verbrennungsluftströmungsraum ist.

10. Brennkammeranordnung nach einem der vorangehenden Ansprüche, **dadurch gekennzeichnet, dass** das Abschlusselement (40) eine von dem Abschlusselementenboden (44) in Richtung der Abschlusselementen-Längsachse (L) von dem Fluidströmungsraum (26) weg sich erstreckende und den Eingriffsbereich (48) bereitstellende Abschlusselementen-Umfangswandung (46) umfasst.

11. Verfahren zum Zusammenbau einer Brennkammeranordnung (10) nach einem der vorangehenden Ansprüche, umfassend die Maßnahmen:
a) Bereitstellen einer Gehäuseanordnung (12) mit dem ersten Gehäusebereich (14) und dem zweiten Gehäusebereich (16) derart, dass der Zündorgansitz (36) im Bereich der Zündorgan-Durchgriffsöffnung (32) positioniert ist,
b) Einbringen des Zündorgans (34) durch die Zündorgan-Durchgriffsöffnung (32) hindurch derart, dass das Zündorgan (34) in Anlage an dem Zündorgansitz (36) gebracht wird,
c) Einbringen des Abschlusselements (40) in die Zündorgan-Durchgriffsöffnung (32) vermittels eines die Außen-Bodenfläche (94) beaufschlagenden Montagewerkzeugs (86) derart, dass durch das die Außen-Bodenfläche (94) in Richtung der Abschlusselementen-Längsachse (L) auf den Fluidströmungsraum (26) zu beaufschlagende Montagewerkzeug (86) das Abschlusselement (40) mit seinem Abschlusselementenboden (44) und seinem Innen-Eingriffsbereich (52) durch die Zündorgan-Durchgriffsöffnung (32) hindurch bewegt wird, bis der Innen-Eingriffsbereich (52) im Wesentlichen an der Innenseite bezüglich der Innenfläche (56) der Wandung (42) des zweiten Gehäusebereichs (16) positioniert ist,
d) Entfernen des Montagewerkzeugs (86) von der Außen-Bodenfläche (94) und dabei Entspannen des Abschlusselements (40) derart, dass der Innen-Eingriffsbereich (52) durch Verlagerung nach radial außen die Innenfläche (56) der Wandung (42) des zweiten Gehäusebereichs (16) radial übergreift und zur Anlage an dieser kommt.

12. Verfahren nach Anspruch 11, **dadurch gekennzeichnet, dass** vor Durchführung der Maßnahmen b) und c) eine das Zündorgan (34) und das Abschlusselement (40) umfassende Vormontagebaugruppe (81) bereitgestellt wird, und dass bei den Maßnahmen b) und c) die Vormontagebaugruppe (81) durch die Zündorgan-Durchgriffsöffnung (32) hindurch in diese eingebracht wird.

13. Verfahren nach Anspruch 11 oder 12, sofern auf Anspruch 2 rückbezogen, **dadurch gekennzeichnet, dass** bei der Maßnahme c) das Abschlusselement (40) mit seinem Außen-Eingriffsbereich (58) sich in Richtung der Abschlusselementen-Längsachse (L) an der Außenseite der Wandung (42) des zweiten Gehäusebereichs (16) abstützt.

14. Verfahren nach einem der Ansprüche 11-13, sofern auf Anspruch 7 rückbezogen, **dadurch gekennzeichnet, dass** nach der Maßnahme d) der Beaufschlagungsvorsprung (70) das Zündorgan (34) in Anlage an dem Zündorgansitz (36) presst.

15. Verfahren nach einem der Ansprüche 11-14, **dadurch gekennzeichnet, dass** das Abschlusselement (40) eine von dem Abschlusselementenboden (44) in Richtung der Abschlusselementen-Längsachse (L) von dem Fluidströmungsraum (26) weg sich erstreckende und den Eingriffsbereich (48) bereitstellende Abschlusselementen-Umfangswandung (46) umfasst, dass das Montagewerkzeug (86) einen im Wesentlichen zylindrischen, vorzugsweise hohlzylindrischen, Abschlusselementen-Beaufschlagungsbereich (88) umfasst, und dass bei nicht durch das Montagewerkzeug (86) beaufschlagtem Abschlusselement (40) eine Innenabmessung (D_{I}), vorzugsweise Innendurchmesser, der Abschlusselementen-Umfangswandung (46) größer ist, als eine Außenabmessung (D_{A}), vorzugsweise Außendurchmesser, des Montagewerkzeugs (86) in seinem Abschlusselementen-Beaufschlagungsbereich (88).

## Claims

1. Combustion chamber assembly, especially for a vehicle heater, comprising
- a first housing area (14) with an ignition element mount (36), wherein an ignition element (34) is supported at the ignition element mount (36),
- a second housing area (16) defining a fluid flow space (26) to the outside with an ignition element access opening (32), wherein the ignition element (34) can be moved to the ignition element mount (36) through the ignition element access opening (32) or/and an electric line (76) for the ignition element (34) extends through the ignition element access opening (32),
- an elastically deformable closing element (40) for closing the ignition element access opening (32), wherein the closing element (40) comprises a meshing area (48) interacting with a wall (42) of the second housing area (16), which wall surrounds the ignition element access opening (32), wherein the meshing area (48) comprises an inner meshing area (52) supported in relation to an inner surface (56) of the wall (42), which said inner surface faces the fluid flow space (26), wherein the inner meshing area (52) comprises an inner contact surface (54) surrounding a closing element longitudinal axis (L) ring-like, and being oriented substantially at right angles to the closing element longitudinal axis (L) and away from the fluid flow space (26) and wherein the closing element (40) comprises a closing element bottom (44) with an outer bottom surface (94) oriented outwardly, in the direction away from the fluid flow space (26),
**characterized in that** the outer bottom surface (94) is offset in relation to the inner contact surface (54) of the inner meshing area (52) in the direction of the closing element longitudinal axis (L) towards the fluid flow space (26).

2. Combustion chamber assembly in accordance with claim 1, **characterized in that** the closing element (40) comprises an outer meshing area (58) supported in relation to an outer surface (98) of the wall (42), which said outer surface faces away from the fluid flow space (26).

3. Combustion chamber assembly in accordance with claim 2, **characterized in that** the outer meshing area (58) comprises an outer contact surface (60), which surrounds the closing element longitudinal axis (L) in a ring-shaped manner and is oriented essentially at right angles to the closing element longitudinal axis (L).

4. Combustion chamber assembly in accordance with one of the preceding claims, **characterized in that** the closing element (40) comprises a circumferential meshing area (64) supported in relation to an opening circumferential surface (62) of the wall (42), which said circumferential surface surrounds the ignition element access opening (32).

5. Combustion chamber assembly in accordance with claim 4, **characterized in that** the opening circumferential surface (62) of the wall (42) has a conical configuration, such that the ignition element access opening (32) tapers in the direction of the fluid flow space (26), preferably wherein the circumferential meshing area (64) comprises a conical circumferential contact surface (66) surrounding the closing element longitudinal axis (L) in a ring-shaped manner.

6. Combustion chamber assembly in accordance with claims 3 and 5, **characterized in that** the inner contact surface (54), the outer contact surface (60) and the circumferential contact surface (66) define a circumferential groove (50), which is radially outwardly open in relation to the closing element longitudinal axis (L) and receives the wall (42) of the second housing area (16).

7. Combustion chamber assembly in accordance with one of the preceding claims, **characterized in that** an acting projection (70), which projects in the direction of the closing element longitudinal axis (L) towards the fluid flow space (26) and acts on the ignition element (34) in contact with the ignition element mount (36), is provided on an inner side (68) of the closing element bottom (44), which said inner side faces the fluid flow space (26), or/and that a line projection (74), which projects in the direction of the element longitudinal axis (L) away from the fluid flow space (26) and through which the electric line (76) passes, is provided on an outer side (72) of the closing element bottom (44), which said outer side faces away from the fluid flow space (26).

8. Combustion chamber assembly in accordance with one of the preceding claims, **characterized in that** the outer bottom surface (94) surrounds the closing element longitudinal axis (L) in a ring-shaped manner.

9. Combustion chamber assembly in accordance with one of the preceding claims, **characterized in that** the first housing area (14) forms a combustion chamber housing (18) defining a combustion chamber (20), or/and that the second housing area (16) forms a heat exchanger area (22), or/and that the fluid flow space (26) is a combustion air flow space.

10. Combustion chamber assembly in accordance with one of the preceding claims, **characterized in that** the closing element (40) comprises a closing element circumferential wall (46), which extends from the closing element bottom (44) in the direction of the closing element longitudinal axis (L) away from the fluid flow space (26) and forms the meshing area (48).

11. Process for assembling a combustion chamber assembly (10) in accordance with one of the preceding claims, comprising the following steps:
a) provision of a housing unit (12) with the first housing area (14) and with the second housing area (16) such that the ignition element mount (36) is positioned in the area of the ignition element access opening (32),
b) insertion of the ignition element (34) through the ignition element access opening (32) such that the ignition element (34) is brought into contact with the ignition element mount (36),
c) insertion of the closing element (40) into the ignition element access opening (32) by means of an assembly tool (86) acting on the outer bottom surface (94) such that the closing element (40) with its closing element bottom (44) and with its inner meshing area (52) is moved by the assembly tool (86) acting on the outer bottom surface (94) in the direction of the closing element longitudinal axis (L) towards the fluid flow space (26) through the ignition element access opening (32) until the inner meshing area (52) is positioned essentially on the inner side in relation to the inner surface (56) of the wall (42) of the second housing area (16),
d) removal of the assembly tool (86) from the outer bottom surface (94) and release of the closing element (40) in the process such that the inner meshing area (52) radially overlaps the inner surface (56) of the wall (42) of the second housing area (16) due to a radially outward displacement and comes into contact with this inner surface.

12. Process in accordance with claim 11, **characterized in that** a preassembled assembly unit (81) comprising the ignition element (34) and the closing element (40) is formed before steps b) and c) are carried out, and that the preassembled assembly unit (81) is inserted into this preassembled assembly unit through the ignition element access opening (32) in steps b) and c).

13. Process in accordance with claim 11 or 12, if referred back to claim 2, **characterized in that** the closing element (40) with its outer meshing area (58) is supported in step c) on the outer side of the wall (42) of the second housing area (16) in the direction of the closing element longitudinal axis (L).

14. Process in accordance with one of the claims 11-13, if referred back to claim 7, **characterized in that** the acting projection (70) presses the ignition element (34) into contact with the ignition element mount (36) after step d).

15. Process in accordance with one of the claims 11-14, **characterized in that** the closing element (40) comprises a closing element circumferential wall (46), which extends from the closing element bottom (44) in the direction of the closing element longitudinal axis (L) away from the fluid flow space (26) and forms the meshing area (48); that the assembly tool (86) comprises an essentially cylindrical, preferably hollow cylindrical, closing element acting area (88), and that when the closing element (40) is not being acted on by the assembly tool (86), an internal dimension (D_{I}), preferably the internal diameter, of the closing element circumferential wall (46) is greater than an external dimension (D_{A}), preferably the external diameter, of the assembly tool (86) in the closing element acting area (88).

## Revendications

1. Arrangement de chambre de combustion, notamment pour un chauffage de véhicule, comprenant
- une première zone de boîtier (14) avec un siège d'élément d'allumage (36), dans laquelle un élément d'allumage (34) est supporté au niveau du siège d'élément d'allumage (36),
- une deuxième zone de boîtier (16) définissant un espace d'écoulement de fluide (26) vers l'extérieur avec une ouverture d'accès d'élément d'allumage (32), dans laquelle l'élément d'allumage (34) peut être déplacé vers le siège d'élément d'allumage (36) à travers l'ouverture d'accès d'élément d'allumage (32) et/ou une ligne électrique (76) pour l'élément d'allumage (34) s'étend à travers l'ouverture d'accès d'élément d'allumage (32),
- un élément de fermeture (40) élastiquement déformable pour fermer l'ouverture d'accès d'élément d'allumage (32), dans lequel l'élément de fermeture (40) comprend une zone d'engagement (48) interagissant avec une paroi (42) de la deuxième zone de boîtier (16), laquelle paroi entoure l'ouverture d'accès d'élément d'allumage (32), dans lequel la zone d'engagement (48) comprend une zone d'engagement intérieure (52) supportée par rapport à une surface intérieure (56) de la paroi (42), ladite surface intérieure faisant face à l'espace d'écoulement de fluide (26), dans lequel la zone d'engagement intérieure (52) comprend une surface de contact intérieure (54) qui entoure un axe longitudinal d'élément de fermeture (L) de manière annulaire et est orientée essentiellement à angle droit par rapport à l'axe longitudinal d'élément de fermeture (L) et orientée loin de l'espace d'écoulement de fluide (26) et dans lequel l'élément de fermeture (40) comprend un fond d'élément de fermeture (44) avec une surface de fond extérieure (94) orientée vers l'extérieur, dans la direction s'éloignant de l'espace d'écoulement de fluide (26),
**caractérisé en ce que** la surface de fond extérieure (94) est décalée par rapport à la surface de contact intérieure (54) de la zone d'engagement intérieure (52) dans la direction de l'axe longitudinal d'élément de fermeture (L) vers l'espace d'écoulement de fluide (26).

2. Arrangement de chambre de combustion selon la revendication 1, **caractérisé en ce que** l'élément de fermeture (40) comprend une zone d'engagement extérieure (58) supportée par rapport à une surface extérieure (98) de la paroi (42), ladite surface extérieure étant orientée à l'opposé de l'espace d'écoulement de fluide (26).

3. Arrangement de chambre de combustion selon la revendication 2, **caractérisé en ce que** la zone d'engagement extérieure (58) comprend une surface de contact extérieure (60), qui entoure l'axe longitudinal d'élément de fermeture (L) de manière annulaire et est orientée essentiellement à angle droit par rapport à l'axe longitudinal d'élément de fermeture (L).

4. Arrangement de chambre de combustion selon l'une des revendications précédentes, **caractérisé en ce que** l'élément de fermeture (40) comprend une zone d'engagement circonférentielle (64) supportée par rapport à une surface circonférentielle d'ouverture (62) de la paroi (42), ladite surface circonférentielle entourant l'ouverture d'accès d'élément d'allumage (32).

5. Arrangement de chambre de combustion selon la revendication 4, **caractérisé en ce que** la surface circonférentielle d'ouverture (62) de la paroi (42) a une configuration conique, de sorte que l'ouverture d'accès d'élément d'allumage (32) se rétrécit en direction de l'espace d'écoulement de fluide (26), de préférence dans lequel la zone d'engagement circonférentielle (64) comprend une surface de contact circonférentielle conique (66) entourant l'axe longitudinal de l'élément de fermeture (L) de manière annulaire.

6. Arrangement de chambre de combustion selon les revendications 3 et 5, **caractérisé en ce que** la surface de contact intérieure (54), la surface de contact extérieure (60) et la surface de contact circonférentielle (66) définissent une rainure circonférentielle (50), qui est ouverte radialement vers l'extérieur par rapport à l'axe longitudinal d'élément de fermeture (L) et qui reçoit la paroi (42) de la deuxième zone de boîtier (16).

7. Arrangement de chambre de combustion selon l'une des revendications précédentes, **caractérisé en ce qu'**il est prévu sur une face intérieure (68) du fond de l'élément de fermeture (44) une saillie active (70) qui fait saillie dans la direction de l'axe longitudinal d'élément de fermeture (L) vers l'espace d'écoulement de fluide (26) et qui agit sur l'élément d'allumage (34) en contact avec le siège d'élément d'allumage (36), qui est tournée vers l'espace d'écoulement de fluide (26), ou/et qu'une saillie de ligne (74), qui fait saillie dans la direction de l'axe longitudinal d'élément de fermeture (L) en s'éloignant de l'espace d'écoulement de fluide (26) et à travers laquelle passe la ligne électrique (76), est prévue sur un côté extérieur (72) du fond de l'élément de fermeture (44), qui est tourné à l'opposé de l'espace d'écoulement de fluide (26).

8. Arrangement de chambre de combustion selon l'une des revendications précédentes, **caractérisé en ce que** la surface de fond extérieure (94) entoure l'axe longitudinal d'élément de fermeture (L) de manière annulaire.

9. Arrangement de chambre de combustion selon l'une des revendications précédentes, **caractérisé en ce que** la première zone de boîtier (14) forme un boîtier de chambre de combustion (18) définissant une chambre de combustion (20), ou/et que la deuxième zone de boîtier (16) forme une zone d'échangeur de chaleur (22), ou/et que l'espace d'écoulement de fluide (26) est un espace d'écoulement d'air de combustion.

10. Arrangement de chambre de combustion selon l'une des revendications précédentes, **caractérisé en ce que** l'élément de fermeture (40) comprend une paroi périphérique (46) de l'élément de fermeture, qui s'étend depuis le fond (44) de l'élément de fermeture dans la direction de l'axe longitudinal d'élément de fermeture (L) en s'éloignant de l'espace d'écoulement de fluide (26) et qui forme la zone d'engagement (48).

11. Procédé d'assemblage d'un arrangement de chambre de combustion (10) selon l'une des revendications précédentes, comprenant les étapes suivantes :
a) mise à disposition d'un arrangement de boîtier (12) avec la première zone de boîtier (14) et la deuxième zone de boîtier (16) de telle sorte que le siège d'élément d'allumage (36) est positionné dans la zone de l'ouverture d'accès d'élément d'allumage (32),
b) insertion de l'élément d'allumage (34) par l'ouverture d'accès d'élément d'allumage (32) de telle sorte que l'élément d'allumage (34) est mis en contact avec le siège d'élément d'allumage (36),
c) insertion de l'élément de fermeture (40) dans l'ouverture d'accès d'élément d'allumage (32) au moyen d'un outil de montage (86) agissant sur la surface de fond extérieure (94) de telle sorte que l'élément de fermeture (40) avec son fond d'élément de fermeture (44) et sa zone d'engagement intérieure (52) est déplacé par l'outil de montage (86) agissant sur la surface de fond extérieure (94) dans la direction de l'axe longitudinal d'élément de fermeture (L) vers l'espace d'écoulement de fluide (26) à travers l'ouverture d'accès d'élément d'allumage (32) jusqu'à ce que la zone d'engagement intérieure (52) soit positionnée essentiellement sur le côté intérieur par rapport à la surface intérieure (56) de la paroi (42) de la deuxième zone de boîtier (16), et
d) enlèvement de l'outil de montage (86) de la surface de fond extérieure (94) et libération de l'élément de fermeture (40) de telle sorte que la zone d'engagement intérieure (52) recouvre radialement la surface intérieure (56) de la paroi (42) de la deuxième zone de boîtier (16) par un déplacement radial vers l'extérieur et entre en contact avec cette surface intérieure.

12. Procédé selon la revendication 11, **caractérisé en ce qu'**une unité de préassemblage (81) comprenant l'élément d'allumage (34) et l'élément de fermeture (40) est formée avant que les étapes b) et c) ne soient effectuées, et **en ce que** l'unité de préassemblage (81) est insérée dans cette unité de préassemblage à travers l'ouverture d'accès d'élément d'allumage (32) aux étapes b) et c).

13. Procédé selon la revendication 11 ou 12, si renvoyé à la revendication 2, **caractérisé en ce que** l'élément de fermeture (40) avec sa zone d'engagement extérieure (58) est supporté dans l'étape c) sur le côté extérieur de la paroi (42) de la deuxième zone de boîtier (16) dans la direction de l'axe longitudinal d'élément de fermeture (L).

14. Procédé selon l'une des revendications 11-13, si renvoyé à la revendication 7, **caractérisé en ce que** la saillie active (70) presse l'élément d'allumage (34) en contact avec le siège d'élément d'allumage (36) après l'étape d).

15. Procédé selon l'une des revendications 11-14, **caractérisé en ce que** l'élément de fermeture (40) comprend une paroi périphérique de l'élément de fermeture (46), qui s'étend du fond de l'élément de fermeture (44) dans la direction de l'axe longitudinal d'élément de fermeture (L) en s'éloignant de l'espace d'écoulement de fluide (26) et qui forme la zone d'engagement (48) ; que l'outil de montage (86) présente une zone d'action d'élément de fermeture (88) essentiellement cylindrique, de préférence cylindrique creuse, et que lorsque l'élément de fermeture (40) n'est pas sollicité par l'outil de montage (86), une dimension intérieure (D_{I}), de préférence le diamètre intérieur, de la paroi périphérique de l'élément de fermeture (46) est supérieure à une dimension extérieure (D_{A}), de préférence le diamètre extérieur, de l'outil de montage (86) dans la zone d'action d'élément de fermeture (88).
